# EUROPEAN PATENT SPECIFICATION

(11) **EP 1 905 621 B1**
(45) Date of publication and mention of the grant of the patent: **02.09.2009**
(21) Application number: 06425658.9
(22) Date of filing: 26.09.2006
(51) Int. Cl.: B60H 1/00

(54) **Air treatment assembly for vehicles**
Kraftfahrzeugluftbehandlungsvorrichtung
Dispositif de traitement de l'air pour véhicules

(43) Date of publication of application: 02.04.2008
(73) Proprietor: DENSO THERMAL SYSTEMS S.p.A., 10046 Poirino (Torino) (IT)
(72) Inventor: Ferrarese, Claudio, 10046 Poirino (Torino) (IT)
(74) Representative: Marchitelli, Mauro

(56) References cited:
- EP-A2- 1 219 477
- EP-A2- 1 241 032
- WO-A-01/62530
- WO-A-99/02355
- DE-A1- 19 539 850

## Description

The present invention relates to an air treatment assembly for vehicles, comprising a case containing an evaporator and a heating radiator, in which in the case are defined a first chamber downstream of the evaporator and upstream of the heating radiator for collecting the cold air flow, a second chamber downstream of the heating radiator for collecting the warm air flow and a third chamber for mixing the cold and warm air flows and communicating with the first chamber and with the second chamber by means of a first and a second opening, and in which a valve element is provided, positioned to open and close the first and the second opening selectively.

In air treatment assemblies of this kind, there is a mixing difficulty between the cold air flow and the warm air flow when communication is opened between the chamber for collecting the cold flow and the mixing chamber.

Starting from the condition in which the valve element closes the communication opening between the cold flow collection chamber and the mixing chamber, in the instants immediately following the opening movement of the valve element a cold air current is created that does not mix with the warm air flow. This mixing difficulty between the cold flow and the warm flow can cause excessively cold air to flow out from some distribution nozzles in the passenger compartment of the vehicle in the instants immediately following a command regulating the temperature of the air.

EP 1 241 032 discloses an air treatment assembly upon which the preamble of appending claim 1 is based.

The object of the present invention is to provide an air treatment assembly that overcomes said drawback.

According to the present invention, said object is achieved by an air treatment assembly having the characteristics set out in the claims.

The present invention shall now be described in detail with reference to the accompanying drawings, provided purely by way of non limiting example, in which:
- Figure 1 is a perspective view of an air treatment assembly for vehicles according to the present invention,
- Figure 2 is an exploded perspective view of the assembly of Figure 1,
- Figures 3 and 4 are perspective views of the part indicated by the arrow II in Figure 2, showing two operative positions of the valve element, and
- Figures 5 and 6 are sections respectively according to the lines V-V and VI-VI of Figures 3 and 4.

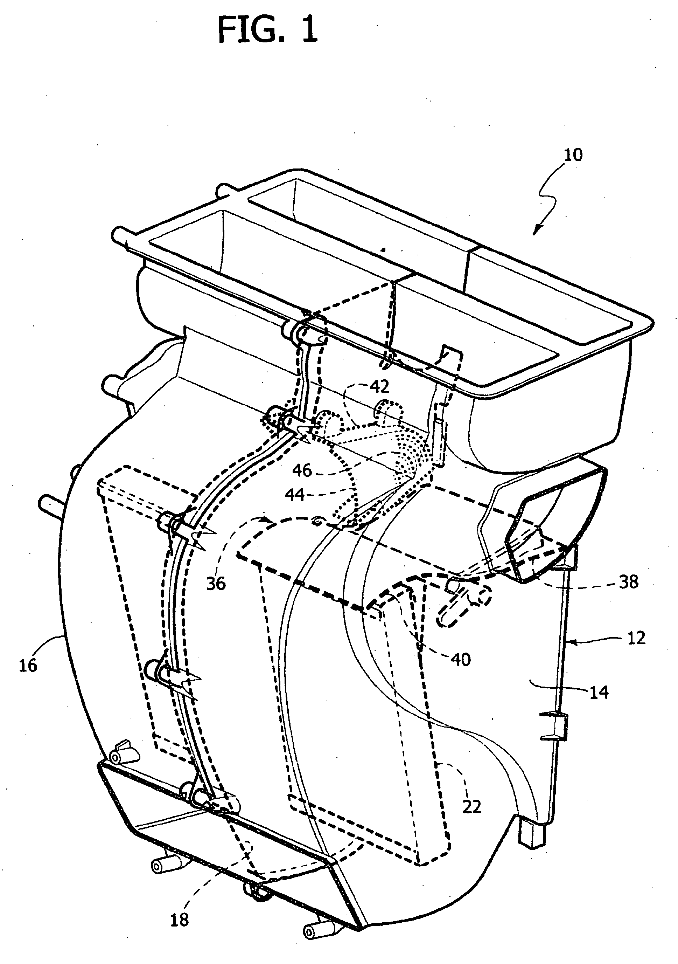

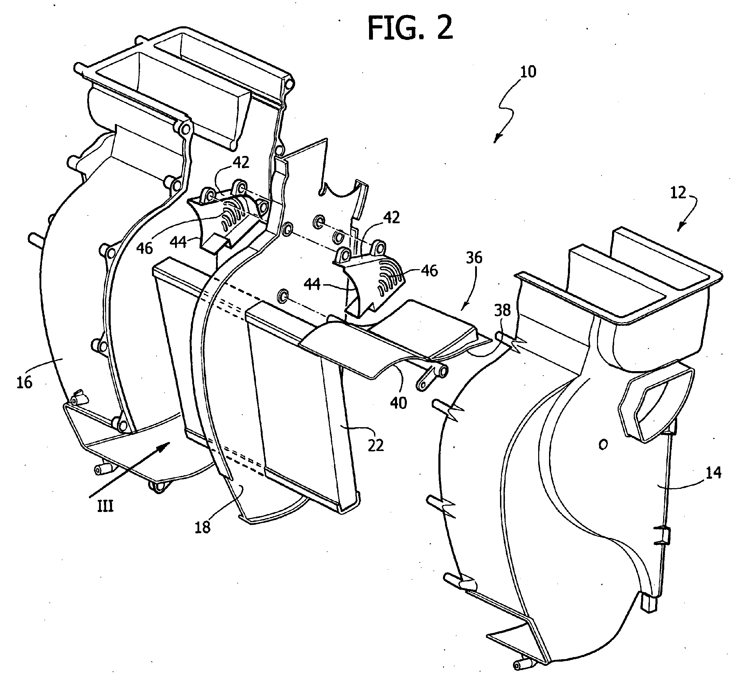

With reference to Figures 1 and 2, the numeral 10 designates an air treatment assembly for vehicles to be installed in the dashboard of a vehicle. The assembly 10 comprises a case made of plastic material 12 within which are defined a plurality of chambers and conduits for the collection and distribution of an air flow. As shown in Figure 2, the case 12 is preferably formed by two shells 14, 16 fastened to each other along a median plane of symmetry of the assembly 10. In the example shown in the figures, the assembly 10 is provided a central baffle 18 fastened between the two shells 14, 16 of the case 12. The baffle 18 subdivides the interior volume of the case 12 in two substantially equal parts, in order to obtain a two-zone treatment assembly that enables to treat in differentiated fashion the air flow of the right side and of the left side of the passenger compartment. However, the present invention is not limited to two-zone assemblies and it can also be applied to single-zone air treatment assemblies.

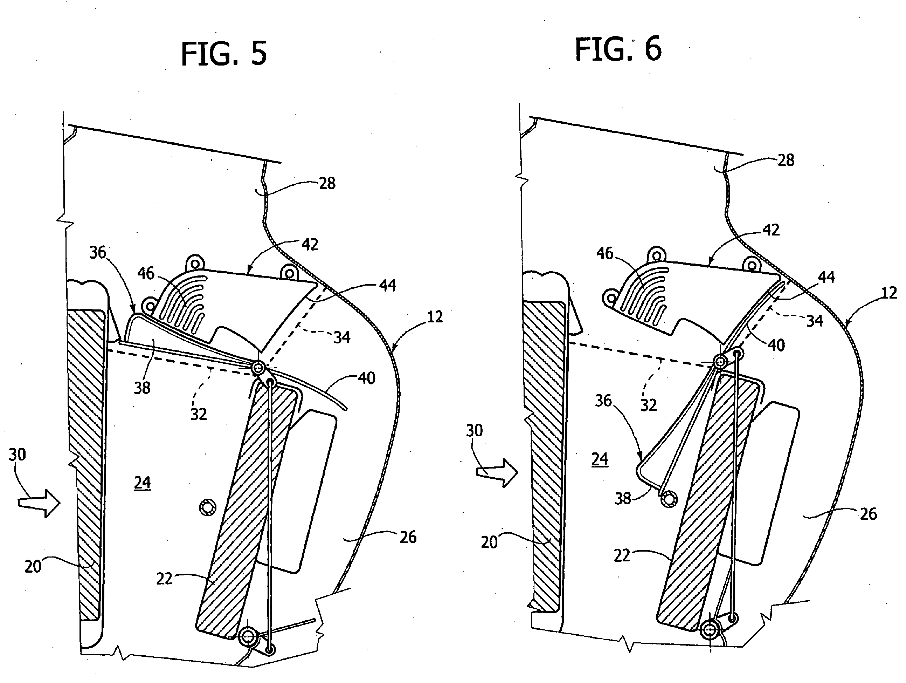

With reference to Figures 5 and 6, within the case 12 are housed an evaporator 20 which is a part of the vehicle air conditioning system and a heating radiator 22. In the case 12 are defined a first chamber 24, a second chamber 26 and a third chamber 28. The first chamber 24 serves as a chamber for collecting the cold air flow and it is positioned downstream of the evaporator 20 and upstream of the heating radiator 22, with reference to the direction of the air flow indicated by the arrow 30. The second chamber 26 is positioned downstream of the heating radiator 22 and it serves as a chamber for collecting the warm air flow. The third chamber 28 serves as a mixing chamber between the cold air flow and the warm air flow coming respective from the chambers 24 and 26. The third chamber 28 communicates with the first chamber 24 through a first opening 32 and with the second chamber 26 through a second opening 34. For the sake of illustration clarity, the outlines of the openings 32, 34 are shown with dashed line in Figures 5 and 6.

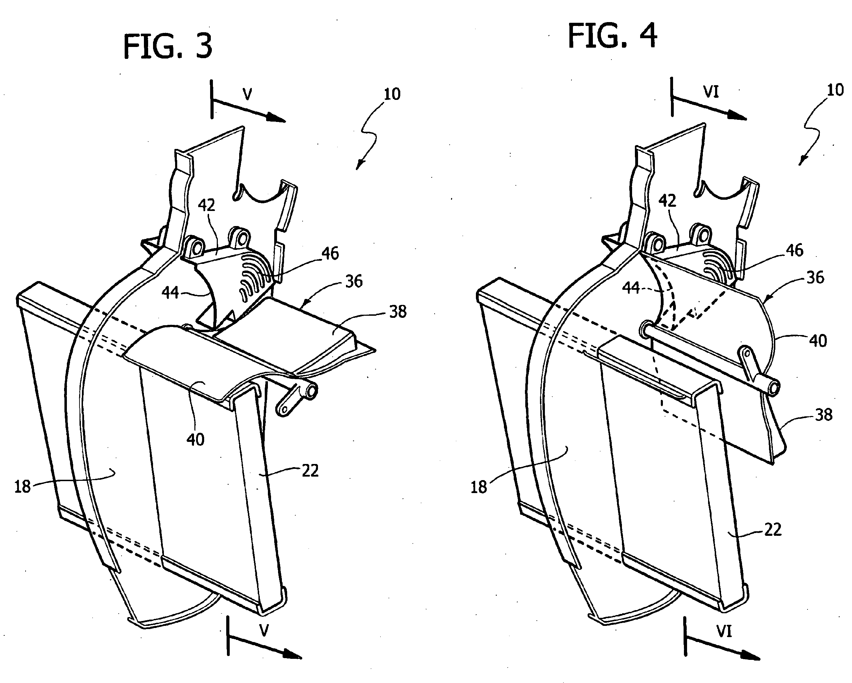

The air treatment assembly 10 comprises a valve element 36 arranged to open and close selectively said the first and the second opening 32, 34. The valve element 36 is articulated with respect to the case 12 around an axis situated above the heating radiator 22. In the example shown in the figures, the valve element 36 is of the butterfly type with sections 38, 40 associated, respectively, to the first opening 32 and to the second opening 34. The valve element 36 is rotatable around its own axis of articulation between the two extreme positions shown respectively in Figures 3, 5 and 4, 6. In the first extreme position shown in Figures 3 and 5, the valve element 36 closes the first opening 32 and opens the second opening 34. In the second extreme position shown in Figures 4 and 6, the valve element 36 opens the first opening 32 and closes the second opening 34. The valve element 36 can assume any intermediate position between these two extreme positions. The valve element 36 is associated to a control device whose operation is not described herein because it lies outside the content of the claims of the present invention.

As the example illustrated in the figures is a two-zone air treatment assembly, the valve element 36 is subdivided in axial direction into two sections situated at opposite sides relative to the central baffle 18. The two sections can be controlled independently from each other to select independently the temperature of the air flow on the left side and on the right side of the passenger compartment. In the case of a single-zone air treatment assembly, the valve element 36 would comprise a single section.

The air treatment assembly 10 according to the present invention comprises at least one air conveying member 42 fixed relative to the case 12 and positioned in such a way as to draw at least one part of the warm flow exiting the second chamber 26 and to distribute said flow at the opening 32 wherefrom exits the cold air flow. Each conveying member 42 is constituted by a half-shell made of plastic material having an inlet 44 positioned at the second opening 34 and an outlet 46 positioned at the first opening 32. Said half-shell is fastened to a wall facing the mixing chamber 28.

In the example shown in the figures, two conveying members 42 are provided, fastened at opposite sides relative to the central baffle 18. The conveying members are situated in the mixing chamber 28. In addition to the two conveying members 42 fastened to the central baffle 18, two other conveying members could be fastened on the inner faces of the two shells 14, 16. In the case of a single-zone air treatment assembly since the central baffle 18 is not present, the conveying members 42 shall be fastened on the inner faces of the shells 14, 16 of the case 12.

Preferably, the outlet 46 of each conveying member 42 is formed by a plurality of slots formed on a face of the member 42 that is substantially orthogonal to the inlet 44, so that the air flow exiting the conveying member 42 is directed in substantially orthogonal fashion relative to the air flow entering said member. The slots constituting the outlet 46 of the conveying member 42 are positioned in such a way as to distribute the air flow exiting the conveying member 42 at the opening 32 for the exit of the cold flow.

With reference to Figures 3-6, when the valve element 36 is in the position shown in Figures 3 and 5 the opening 32 is completely shut. All of the air flow traversing the evaporator 30 also passes through the heating radiator 32 and collects in the second chamber 26. Thence, the warm air flow exits through the second opening 34 and reaches the mixing chamber 28, from which it reaches distribution conduits that convey the air flow towards the distribution nozzles provided on the vehicle dashboard.

A part of the warm flow exiting the chamber 26 enters the inlet 44 of the conveying member 42 and exits the slots constituting the outlet 46 of the conveying member 42. The outlet of the conveying member 42 is situated in the mixing chamber 28, so the flow exiting the conveying member 42 is mixed with the remaining part of the warm flow in the mixing chamber 28.

When the section 38 of the valve member 37 is opened, the cold flow contained in the chamber 24 exits through the opening 32. In the first instants of the opening movement of the section 40 of the valve member 36, the section for the passage of the cold flow is very small, so a thing cold streak is formed that tends to traverse the mixing chamber 28 without mixing with the warm flow exiting the second chamber 26. The conveying members 42 uniformly distribute a warm air flow at the second opening 32, favouring the mixing of the cold stream coming from the first chamber 24 with the warm flow coming from the second chamber 26. The conveying members 42 thus prevent the forming of the cold streak at the outlet of the chamber 24.

## Claims

1. An air treatment assembly for vehicles, comprising a case (12) containing an evaporator (20) and a heating radiator (22), in which in the case (12) are defined a first chamber (24) downstream of the evaporator (20) and upstream of the heating radiator (22) for collecting the cold air flow, a second chamber (26) downstream of the heating radiator (22) for collecting the warm air flow and a third chamber (28) for mixing the cold and warm air flows and communicating with the first chamber (24) and with the second chamber (26) by means of a first and a second opening (32, 34), and in which a valve element (36) is provided, positioned to open and close the first and the second opening (32, 34) selectively, the air treatment assembly comprising at least one air conveying member (42) having an inlet (44) positioned at the second opening (34) and an outlet positioned at the first opening (32),
**characterised in that** said conveying member (42) is formed by a half-shell of plastic material fastened on a wall facing said mixing chamber (28).

2. Air treatment assembly as claimed in claim 1, **characterised in that** the outlet (46) and the inlet (44) of said conveying member (42) are positioned substantially orthogonal to each other.

3. Air treatment assembly as claimed in claim 1, **characterised in that** said outlet (46) of the conveying member (42) is formed by a plurality of openings formed on a surface of the conveying member (42) that is substantially orthogonal relative to said inlet (44).

## Patentansprüche

1. Luftaufbereitungsanordnung für Fahrzeuge, enthaltend ein Gehäuse (12), das einen Verdampfer (20) und einen Heizradiator (22) enthält, wobei im Gehäuse (12) eine erste Kammer (24) stromabwärts des Verdampfers (20) und stromaufwärts des Heizradiators (22) zum Bündeln das Kaltluftstroms und eine zweite Kammer (26) stromabwärts des Heizradiators (22) zum Bündeln des Warmluftstroms sowie eine dritte Kammer (28) zum Mischen des Kalt- und des Warmluftstroms, die mit der ersten Kammer (24) und mit der zweiten Kammer (26) durch eine erste und eine zweite Öffnung (32, 34) in Verbindung steht, ausgebildet sind und ein Ventilelement (36) vorgesehen ist, das derart angeordnet ist, dass es die erste und die zweite Öffnung (32, 34) wahlweise öffnet und schließt, wobei die Luftaufbereitungsanordnung wenigstens ein Luftbeförderungselement (42) enthält, das über einen Einlass (44), der an der zweiten Öffnung (34) angeordnet ist, und einen Auslass verfügt, der an der ersten Öffnung (32) angeordnet ist,
**dadurch gekennzeichnet, dass** das Beförderungselement (42) durch ein halbschalenförmiges Kunststoffmaterial ausgebildet ist, das an einer Wand befestigt ist, die der Mischkammer (28) zugewandt ist.

2. Luftaufbereitungsanordnung nach Anspruch 1, **dadurch gekennzeichnet, dass** der Auslass (46) und der Einlass (44) des Beförderungselementes (42) im wesentlichen senkrecht zueinander angeordnet sind.

3. Luftaufbereitungsanordnung nach Anspruch 1, **dadurch gekennzeichnet, dass** der Auslass (46) des Beförderungselementes (42) durch eine Vielzahl von Öffnungen ausgebildet ist, die auf einer Oberfläche des Beförderungselementes (42) ausgebildet sind, das im wesentlichen senkrecht im Bezug auf den Einlass (44) ist.

## Revendications

1. Ensemble de traitement d'air pour véhicules, comprenant un boîtier (12) contenant un évaporateur (20) et un radiateur chauffant (22), dans lequel, dans le boîtier (12), sont définies une première chambre (24) en aval de l'évaporateur (20) et en amont du radiateur chauffant (22) destinée à recueillir le flux d'air froid, une seconde chambre (26) en aval du radiateur chauffant (22) destinée à recueillir le flux d'air chaud, et une troisième chambre (28) destinée à mixer les flux d'air froid et d'air chaud et à communiquer avec la première chambre (24) et avec la seconde chambre (26) au moyen d'une première et d'une seconde ouvertures (32, 34), et dans lequel un élément vanne (36) est prévu, positionné pour ouvrir et fermer sélectivement la première et la seconde ouvertures (32, 34), l'ensemble de traitement d'air comprenant au moins un élément de transfert d'air (42) ayant un orifice d'entrée (44) positionné au niveau de la seconde ouverture (34) et un orifice de sortie positionné au niveau de la première ouverture (32),
**caractérisé en ce que** ledit élément de transfert (42) est formé d'une demi-coque de matière plastique fixée sur une paroi faisant face à ladite chambre de mixage (28).

2. Ensemble de traitement d'air selon la revendication 1, **caractérisé en ce que** l'orifice de sortie (46) et l'orifice d'entrée (44) dudit élément de transfert (42) sont positionnés de façon sensiblement orthogonale l'un par rapport à l'autre.

3. Ensemble de traitement d'air selon la revendication 1, **caractérisé en ce que** ledit orifice de sortie (46) de l'élément de transfert (42) est formé d'une pluralité d'ouvertures formées sur une surface de l'élément de transfert (42) qui est sensiblement orthogonale par rapport audit orifice d'entrée (44).
